# EUROPEAN PATENT APPLICATION

(11) **EP 4 144 549 A1**
(43) Date of publication of application: **08.03.2023**
(21) Application number: 21194943.3
(22) Date of filing: 03.09.2021
(51) Int. Cl.: B60H 1/00, B60H 1/32

(54) **HEATING AND/OR COOLING TREATMENT MODULE FOR VEHICLE**

(71) Applicant: Valeo Klimasysteme GmbH, 96476 Bad Rodach (DE)
(72) Inventor: FIENE, Andreas, 96476 Bad Rodach (DE)
(74) Representative: Valeo Systèmes Thermiques

(57) **Abstract**

The present invention concerns a heating and/or cooling treatment module (1) for vehicle comprising at least a compressor device (6), a heat exchanger (2) adapted to exchange heat between a refrigerant fluid and a liquid and an accumulation device (10) adapted to store at least partially refrigerant fluid, characterized in that the heating and/or cooling treatment module (1) comprises connection devices (12, 14, 16, 18) fluidly connecting the compressor device (6), the heat exchanger (2) and accumulation device (10) to each other, the heat exchanger (2) extending mainly along a longitudinal direction (Li), the compressor device (6) extending mainly along a main direction (T1) which is perpendicular to the longitudinal direction (Li).

## Description

The invention relates to a heating and/or cooling treatment module for vehicle, and more particularly to a heating and/or cooling treatment module for a thermal regulation of a battery of a vehicle.

Nowadays, thermal regulation devices make it possible to modify the temperature of an electric battery, either when the vehicle is started in cold weather, by increasing its temperature for example, or when driving or during a battery recharging operation, by reducing the temperature of the electric battery, which tends to heat up during its use.

Traditionally, thermal regulation devices comprise a refrigerant fluid which circulates through different components like heat exchangers, compressor device and expansion device to modify the pressure of the refrigerant fluid. For instance, the refrigerant fluid exchanges calories with another fluid when it circulates through a heat exchanger, its pressure increases when it circulates through a compressor device or its pressure decreases when it circulates through an expansion device. The modification of the pressure of the refrigerant fluid controls the temperature of said another fluid, for example air or water.

The refrigerant fluid participates at the thermal regulation of this another fluid which controls thermally the temperature of a battery system of the vehicle, for instance. In this function, the refrigerant fluid circulates in a dedicated circuit, which can be installed into a heating and/or cooling module.

However, thermal regulation devices occupy a lot of spaces in a vehicle, and constructors wish to reduce the spaces occupied by these systems. In fact, the reduction of the sizes of the components, like the heat exchangers, the compressor device and/or the expansion device, is not the only preoccupation, but the fluidic connections between each of these components and the location in relation to each other are also essential.

The present invention fits into this context by providing a compact heating and/or cooling treatment module in which the different components are fluidly and independently interconnected.

In this context, the present invention is covering a heating and/or cooling treatment module for vehicle comprising at least a compressor device, a heat exchanger adapted to exchange heat between a refrigerant fluid and a liquid and an accumulation device adapted to store at least partially refrigerant fluid, characterized in that the heating and/or cooling treatment module comprises connection devices fluidly connecting the compressor device, the heat exchanger and accumulation device to each other, the heat exchanger extending mainly along a longitudinal direction, the compressor device extending mainly along a main direction which is perpendicular to the longitudinal direction of the heat exchanger.

The heat exchanger is configured to exchange calories between the refrigerant fluid and the liquid which can be water or a dielectric fluid, for instance. For that, the heat exchanger comprises at least a first conduit through which the refrigerant fluid circulates, and a second conduit through which the liquid circulates, the calories exchange being realized between the first and the second conduit.

The compressor device is configured to increase the pressure of the refrigerant fluid. For instance, a pressure of refrigerant fluid circulating upstream the compressor device is less important than a pressure of refrigerant fluid circulating downstream the compressor device. Phase changes of refrigerant fluid along the thermodynamical loop thanks to the compressor device results in an increase of a temperature of the liquid.

The accumulation device is configured to store a part of the refrigerant fluid. More particularly, the accumulation device is configured to compensate and absorb the volume variations of the refrigerant device.

The heating and/or cooling treatment module is configured to manage thermally the refrigerant fluid, noticeably with the compressor device which increases a pressure of the refrigerant fluid, increasing liquid temperature simultaneously. The refrigerant fluid circulating in the heat exchanger exchanges calories with the liquid, for instance handing over calories to the liquid to heat said liquid and cooling the refrigerant fluid. In another configuration, the liquid hands over calories to the refrigerant fluid, the temperature of the refrigerant fluid increasing whereas the temperature of liquid decreases.

The clever disposition of the heat exchanger in relation to the compressor device optimizes the occupied volume of the heating and/or cooling treatment module in a vehicle. Indeed, this reduced volume of the heating and/or cooling treatment module in the vehicle allows a new location of other vehicle components. It is understood the heating and/or cooling treatment module is compacted by itself.

According to an optional characteristic of the invention, the heating and/or cooling treatment module comprises an internal heat exchanger configured to exchange heat between refrigerant fluid at high temperature and refrigerant fluid at low temperature, said internal heat exchanger extending mainly along a longitudinal direction which is parallel to the longitudinal direction of said heat exchanger.

The internal heat exchanger is configured to exchange calories between the refrigerant fluid at high pressure and the refrigerant fluid at low pressure, the pressure of the refrigerant fluid being modified by the compressor device or an expansion device. Generally, the refrigerant fluid at high pressure hands over calories to the refrigerant fluid at low pressure. The longitudinal direction of said heat exchanger and, optionally the longitudinal direction of said internal heat exchanger, is/are parallel to a longitudinal direction of the heating and/or cooling treatment module.

In the present document, a longitudinal or main direction is the axis along which the related components have its longest dimension, transversal and vertical directions being perpendicular to said longest dimension.

Perpendicular or parallel feature shall not be understood as a strict angle, but shall cover a short play for fabrication and assembly tolerances.

According to an optional characteristic of the invention, said longitudinal direction of said heat exchanger, said longitudinal direction of said internal heat exchanger and said main direction of said compression device are part of parallel plans. Each of these directions is a part of dedicated plan, these three plans being parallel to each other.

According to an optional characteristic of the invention, the compressor device comprises a rotation shaft which extends mainly along the main direction of said compressor device. It is understood the compressor device comprises a rotative device comprising the rotation shaft, this rotative device being in rotation with the rotation shaft and around a rotational axis parallel to the main direction.

According to another optional characteristic of the invention, the compressor device is shifted compared to the heat exchanger, and optionally to the internal heat exchanger, according to a vertical direction, the latest being perpendicular to the longitudinal direction of said heat exchanger and the main direction of said compressor device. In other words, the compressor device is at least partly below the heat exchanger and the internal heat exchanger, in relation to the vertical axis.

According to another optional characteristic of the invention, the compressor device is shifted compared at least to the heat exchanger, and optionally to the internal heat exchanger, according to the longitudinal direction of said heat exchanger.

The vertical and longitudinal shift of the compressor device versus the heat exchanger, and optionally the internal heat exchanger, is advantageous because it allows to locate a heavy component like the compressor device as low as possible, in order to lower the centre of gravity of the vehicle equipped with the invention.

According to another optional characteristic of the invention, the heat exchanger adapted to exchange heat between a refrigerant fluid and a liquid is a first heat exchanger, the heating and/or cooling treatment module comprising a second heat exchanger adapted to exchange heat between a refrigerant fluid and a liquid.

During the circulation of the refrigerant fluid through the first heat exchanger and the second heat exchanger, said refrigerant fluid exchanges calories with a liquid to increase or decrease the temperature of the refrigerant fluid.

According to another optional characteristic of the invention, the second heat exchanger extends along longitudinal direction which is parallel to the longitudinal direction of said first heat exchanger.

According to another optional characteristic of the invention, the first heat exchanger, the second heat exchanger and the internal heat exchanger are installed next to each other so as to parallel to each other, the internal heat exchanger being located between the first heat exchanger and the second heat exchanger.

According to another optional characteristic of the invention, the heating and/or cooling treatment module comprises at least a first connection device fluidly connecting the internal heat exchanger at least to the heat exchanger, a second connection device fluidly connecting the heat exchanger to the accumulation device, a third connection device fluidly connecting the accumulation device to the internal heat exchanger, a fourth connection device fluidly connecting the internal heat exchanger to the compressor device, each connection device comprising at least a canal adapted to guide the refrigerant fluid, the heating and/or cooling treatment module comprising a connecting system fluidly connecting at least the compressor device to the internal heat exchanger, at least the connection devices being located on a same face of the heating and/or cooling treatment module.

According to the invention, the location of each connection device optimizes, on the one hand, the assembly of the heating and/or cooling treatment module, and on the other hand, the disassembly of one of the connection devices if it is broken.

Moreover, each connection device comprises a pipe through which the refrigerant fluid circulates from one of the heat exchangers, the internal heat exchanger, the compressor device and/or the accumulation device to one of the heat exchangers, the internal heat exchanger, the compressor device and/or the accumulation device.

According to an optional characteristic of the invention, the connection devices are distinct to each other. Each connection device can be assembled or disassembled on/of the heating and/or cooling treatment module independently from the other connection devices.

According to another optional characteristic of the invention, the connecting system comprises at least a conduit longitudinally framed by on the one hand the compressor device and to the other hand the first heat exchanger, the internal heat exchanger and the second heat exchanger.

According to another optional characteristic of the invention, the heating and/or cooling treatment module comprises a box housing at least the compressor device, the internal heat exchanger, the heat exchanger, the accumulation device and the connection devices, the box comprising a bottom wall and lateral walls extending between the bottom wall to a free end, the free ends of the lateral walls participating to delimit an opening.

According to another optional characteristic of the invention, the bottom wall comprises a first portion facing the heat exchangers and a second portion facing the compressor device, the second portion participating to delimit a cavity housing at least partially the compressor device. Such a cavity is created thanks to longitudinal and vertical shifts of the compressor devices compared to the heat exchanger and optionally the internal heat exchanger.

An advantage of such cavity is that it eases the installation of the module according to the invention because a component of the vehicle can extend in this cavity.

According to another optional characteristic of the invention, the fluidic interface is disposed through one of the lateral walls of the box.

Other characteristics, details and advantages of the invention will become clearer on reading the following description, on the one hand, and several examples of realisation given as an indication and without limitation with reference to the schematic drawings annexed, on the other hand, on which:
[Fig. 1] is a perspective representation of a heating and/or cooling treatment module;
[Fig. 2] is another perspective representation of the heating and/or cooling treatment module according to figure 1;
[Fig. 3] is the heating and/or cooling treatment module according to figure 1 seen from a top view;
[Fig. 4] is the heating and/or cooling treatment module according to figure 1 seen from a profile view;
[Fig. 5] is a schematic representation of a refrigerant fluid circuit of the heating and/or cooling treatment module according to figure 1.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

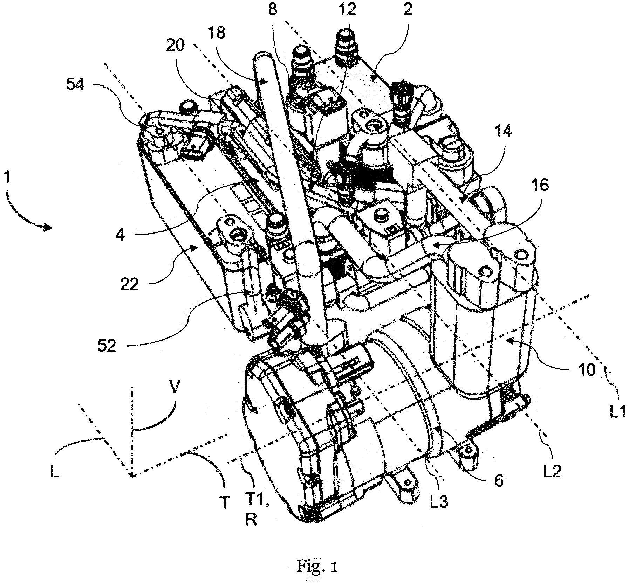

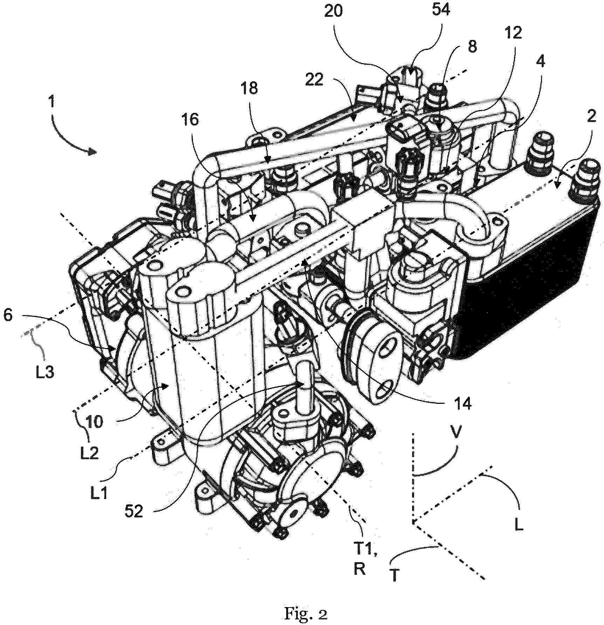

In the following description, the designations "longitudinal", "traversal" and "vertical" refer to the orientation of a heating and/or cooling treatment module according to the invention and or to the components of this module. A longitudinal direction corresponds to a main direction of extension of a heat exchanger or of the module, this longitudinal direction being parallel to a longitudinal axis L of a coordinate system L, V, T shown in the figures 1 to 3. A main direction corresponds to a direction of main extension of a compressor device of the heating and/or cooling treatment module, for example, this main direction being parallel to a transverse axis T of the coordinate system L, V, T, and perpendicular to the longitudinal axis L. The main direction of the compressor device is also transversal to the longitudinal direction. Finally, a vertical direction corresponds to a vertical axis V of the coordinate system L, V, T, the vertical axis V being perpendicular to the longitudinal axis L and to the transversal axis T.

A heating and/or cooling treatment module 1 according to the invention is illustrated in figures 1 to 3, the heating and/or cooling treatment module 1 being configured to be installed in an electric or hybrid vehicle. The heating and/or cooling treatment module 1 comprises a refrigerant fluid which circulates through the heating and/or cooling treatment module 1 to thermally regulate at least another fluid. For instance, the last one circulates through a loop to increase or decrease a temperature of an electric battery of the vehicle.

The heating and/or cooling treatment module 1 comprises at least a heat exchanger 2 adapted to exchange heat between the refrigerant fluid and a liquid.

The compressor device 6 is configured to compress the refrigerant fluid. By "compress" it is understood that the pressure of the refrigerant fluid is increased through the compressor device 6.

The compression of the refrigerant fluid circulating through the compressor device 6 causes the refrigerant fluid to change its phase, passing from a vapor phase to a liquid phase when cooled by another fluid, for example a liquid or air.

Preferentially, the heating and/or cooling treatment module 1 comprises also an expansion device 8. The expansion device 8 is configured to undergo a reduction of pressure of the refrigerant fluid circulating through the said expansion device 8. In other words, a pressure of the refrigerant fluid measured upstream the expansion device 8 is higher than a pressure of the refrigerant fluid measured downstream of the expansion device 8.

The expansion of the refrigerant fluid circulating through the expansion device 8 causes the refrigerant fluid to change its phase, passing from a liquid phase to a vapor phase when heated by another fluid, for example a liquid or air.

It is thus possible to define a high-pressure portion through which circulates the refrigerant fluid from the compressor device 6 to the expansion device 8 and a low-pressure portion through which circulates the refrigerant fluid from the expansion device 8 to the compressor device 6, a pressure of the refrigerant fluid measuring in the high-pressure portion being higher than a pressure of the refrigerant fluid measured in the low-pressure portion.

In an embodiment, the heating and/or cooling treatment module 1 may comprise also an internal heat exchanger 4 is configured to exchange heat between the refrigerant fluid circulating through the high-pressure portion and the refrigerant fluid circulating through the low-pressure portion. In this configuration, the refrigerant fluid circulating through the high-pressure portion ceding calories to the refrigerant fluid circulation through the low-pressure portion.

As shown in figures 1 to 4, the heating and/or cooling treatment module 1 comprises also an accumulation device 10 in which is stored a part of the refrigerant fluid. The accumulation device 10 is configured to accumulate a part of the refrigerant fluid circulating through the heating and/or cooling treatment module 1 in order to absorb a volume variation of the refrigerant fluid, depending on the thermal conditions of use. The accumulation device 10 extends along a longitudinal dimension which is parallel to the vertical axis V, that is to say perpendicular to the longitudinal direction L1 of the heat exchanger 2 and also perpendicular to the main direction T1 of the compressor devices 6. As an option, a shaft axis R of a rotational shaft of said compressor device 6 is longitudinally located between the accumulation device 10 and the heat exchanger 2.

As shown in figures 1 to 4, the heating and/or cooling treatment module 1 comprises a first heat exchanger 2 adapted to exchange heat between the refrigerant fluid and a first liquid and a second heat exchanger 22 adapted to exchange heat between a refrigerant fluid and a second liquid, the first liquid and the second liquid being the same liquid or two different liquids. For that, each heat exchanger 2, 22 comprises two sections, a first section through which the refrigerant fluid flows and a second section through which the liquid flows.

The first heat exchanger 2 is installed on the low-pressure portion while the second heat exchanger 22 is located on the high-pressure portion. It is understood that the refrigerant fluid circulates through the first heat exchanger 2 cools the first liquid, by capturing calories, while the refrigerant fluid that circulates through the second heat exchanger 22 heat the second liquid, by giving up calories.

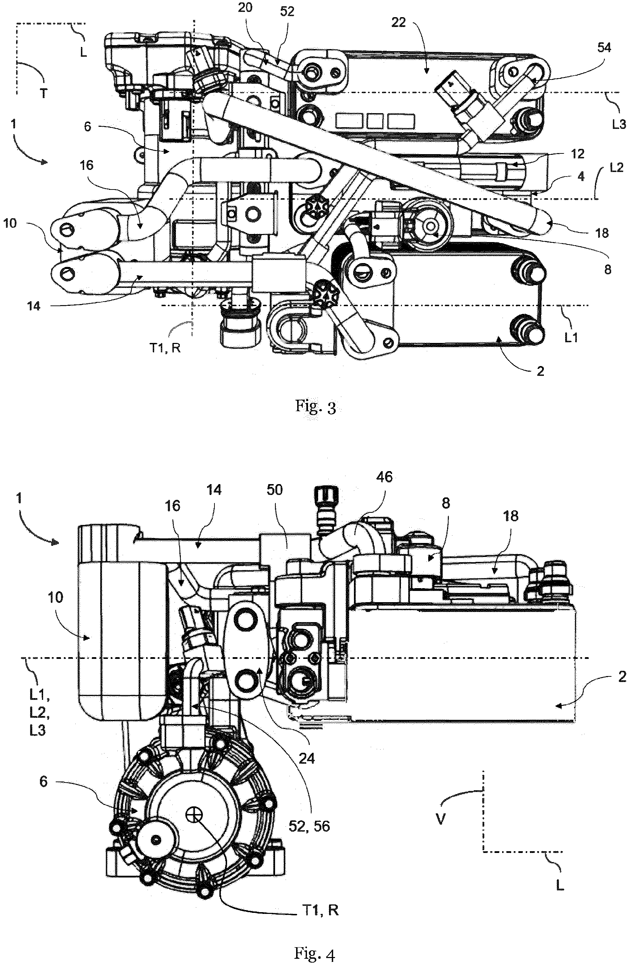

As shown in figure 3, the first heat exchanger 2 extends along a longitudinal direction Li, the internal heat exchanger 4 extending along its proper longitudinal direction L2 parallel to the longitudinal direction L1 of said heat exchanger 2, each longitudinal directions Li, L2 being parallel to the longitudinal direction L of the module. For its part, the compressor device 6 extends mainly along a main direction T1 parallel to the transversal direction T of the module.

According to the invention, the longitudinal direction L1 of the first heat exchanger 2 and optionally the longitudinal direction L2 of the internal heat exchanger 4, is/are perpendicular to the main direction T1 of the compressor device 6. This location of the first heat exchanger 2, the internal heat exchanger 4 and the compressor device 6 optimize the occupied volume of the heating and/or cooling treatment module 1 in the vehicle, which is a compact heating and/or cooling treatment module 1.

The first heat exchanger 2, the internal heat exchanger 4 and the second heat exchanger 22 are parallelepipedal objects (rectangle, square, cuboid). The first heat exchanger 2, the internal heat exchanger 4 and the second heat exchanger 22 are plate-shape designed.

The second heat exchanger 22 mainly extends along a its longitudinal direction L3 parallel to the longitudinal direction L1 of the first heat exchanger 2 and optionally to the longitudinal direction L2 of the internal heat exchanger 4. Thus, the longitudinal direction L3 of said second heat exchanger 22 is perpendicular to the main direction T1 of said compressor device 6, the second heat exchanger 22 extending perpendicularly to the shaft axis R of said compressor device 6.

More particularly, the first heat exchanger 2, the second heat exchanger 22 and the internal heat exchanger 4 are installed next to each other so as to be aligned along a direction parallel to the transversal direction T. The internal heat exchanger 4 is located between the first heat exchanger 2 and the second heat exchanger 22. In other words, the internal heat exchanger 4 is bordered transversally on one side by the first heat exchanger 2 and the other side by the second heat exchanger 22.

Moreover, the compressor device 6 comprises the rotation shaft which extends mainly along the main direction T1 of the compressor device 6. Advantageously, the compressor device 6 comprises a rotational device driven by the rotation shaft, the main direction T1 of the compressor device 6 being merged with a shaft axis R of the rotation shaft.

As shown in figure 4, the compressor device 6 is shifted compared to the first heat exchanger 2, the second heat exchanger 22 and the internal heat exchanger 4 according to the vertical direction V, which is perpendicular to the longitudinal direction L and the transversal direction T. It is understood that a vertical position of the compressor device 6 in relation to the vertical axis V is distinct of a vertical position of the first heat exchanger 2, of the second heat exchanger 22 and of the internal heat exchanger 4.

The compressor device 6 is also shifted compared to the first heat exchanger 2, the second heat exchanger 22 and the internal heat exchanger 4 according to the longitudinal direction L. It is understood that a longitudinal position of the compressor device 6 in relation to the longitudinal direction L is distinct of a longitudinal position of the first heat exchanger 2, of the second heat exchanger 22 and of the internal heat exchanger 4.

According to the invention, each component of the heating and/or cooling treatment module 1 is fluidically connected at least to another component of the heating and/or cooling treatment module 1. It is understood that the components of the heating and/or cooling treatment module 1 participate to delimit a closed circuit through which the refrigerant fluid circulates.

In view of that objective, the heating and/or cooling treatment module 1 comprises at least a first connection device 12 fluidly connecting the internal heat exchanger 4 at least to the heat exchanger 2, a second connection device 14 fluidly connecting the heat exchanger 2 to the accumulation device 10, a third connection device 16 fluidly connecting the accumulation device 10 to the internal heat exchanger 4, a fourth connection device 18 fluidly connecting the internal heat exchanger 4 to the compressor device 6, each connection device comprising at least a canal adapted to guide the refrigerant fluid, the heating and/or cooling treatment module 1 comprising a connecting system 20 fluidly connecting at least the compressor device 6 to the internal heat exchanger 4, at least the connection devices 12, 14, 16, 18 being located on a same face of the heating and/or cooling treatment module 1. Each connection device 14, 16, 18, 20 fluidically connects at least one of the components of the heating and/or cooling treatment module 1 to another component while expanding on the same face of the said heating and/or cooling treatment module 1.

The canal of each connexion devices adapted to guide the refrigerant fluid is for example a first pipe and/or a second pipe, for the first connexion device, and/or a first canal and or a second canal, for the second connexion device. More globally, the canal of each connection devices adapted to guide the refrigerant fluid is for example any tube able to conduct the refrigerant fluid.

It is understood the heating and/or cooling treatment module 1 extends globally in the form of a rectangular parallelepiped, each connection devices 12, 14, 18, 20 is located on the same face of this form. This clever disposition of the connection devices 12, 14, 16, 18 optimizes the assembly and/or the disassembly of the heating and/or cooling treatment module 1.

Moreover, the connection devices 12, 14, 16,18 are distinct to each other. Each connecting device 12, 14, 16, 18 can be assembled or disassembled on the heating and/or cooling treatment module 1 independently of others connection devices 12, 14, 16, 18.

Preferentially, the heating and/or cooling treatment module 1 comprises a box housing at least the compressor device 6, the internal heat exchanger 4, the first heat exchanger 2, the accumulation device 10, the connection devices 12, 14, 16, 18 and the connecting system 20. Preferentially, the box houses also the second heat exchanger 22.

The box comprises a bottom wall and lateral walls extending between the bottom wall to a free end, the free ends of the lateral walls participate to delimit an opening. During the assembly of the heating and/or cooling treatment module 1, the compressor device 6, the internal heat exchanger 4, the first heat exchanger 2, the second heat exchanger 22 and the accumulation device 10, the connection devices 12, 14, 16,18 and the connecting system 20 are installed in the box through the opening.

Advantageously, the connection devices 12, 14, 16, 18 being in front of the opening. The connection devices 12, 14, 16, 18 are, in this location, easily accessible by an operator for assembly or disassembly.

The bottom wall comprises a first portion with respect to the heat exchangers 2, 4, 22 and a second portion with respect to the compressor device 6, the second portion participating to form or delimit a cavity housing at least partially the compressor device. The cavity takes globally a form of a cylindrical recess wall in which the compressor device 6 is located.

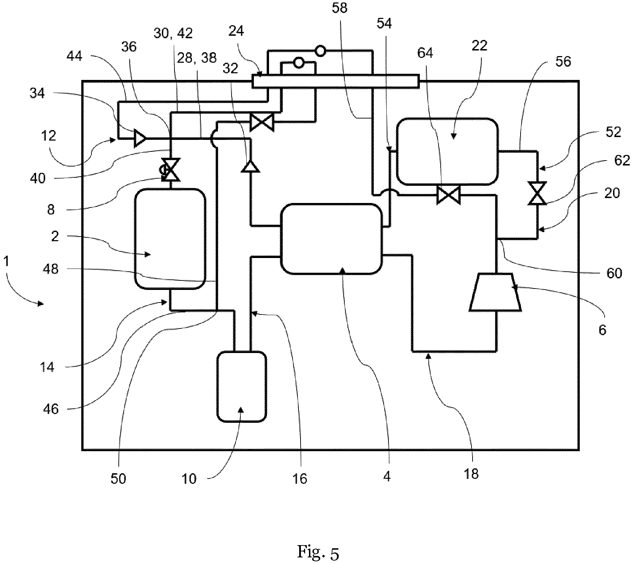

The heating and/or cooling treatment module 1 comprises a fluidic interface 24 adapted to connect at least the connecting system 20 to a heat treatment installation 26 external to the heating and/or cooling treatment module 1, represented in figure 5. The fluidic interface 24 is located through one of the lateral walls of the box. In this disposition, it is easier to fluidly connect the fluidic interface 24 to the heat treatment installation 26. Separation of a connection device from the module does not impose separation of the fluidic interface from the module, namely from the box. Said fluidic interface 24 can remain in place while an operator change a connection device 12, 14, 16, 18 or a connecting system 20.

Each of the connection devices 12, 14, 16, 18 will now be described and starting with the description of the first connection device 12 with reference to figures 1 to 5.

The first connection device 12 comprises a first portion 28 fluidly connecting the internal heat exchanger 4 to the first heat exchanger 2 and a second portion 30 fluidly connecting the first portion 28 to the fluidic interface 24. In other words, the second portion 30 comprises at least a pipe fluidly connecting on the one hand to the first portion 28 and on the other hand to the fluidic interface 24.

More particularly, the first portion 28 is comprising at least a first check-valve 32, the second portion 30 comprising a second check-valve 34. It is understood the first check-valve 32 is adapted to allow the circulation of the refrigerant fluid through the first portion 28 to the first heat exchanger 2 while the second check-valve 34 is adapted to allow the circulation of the refrigerant fluid through the second portion 30 from the fluidic interface 24 to the first portion 28.

As shown in figure 5, the first connection device 12 comprises an intersection organ 36 located at the interface of the first portion 28 and the second portion 30, the first connection device 12 comprising a first pipe 38 extending at least between the intersection organ 36 and the internal heat exchanger 4, a second pipe 40 extending at least between the intersection organ 36 to the first heat exchanger 2 and a third pipe 42 extending at least between the intersection organ 36 to the fluidic interface 24. The refrigerant fluid circulating through the first connection device 12 circulates from the internal heat exchanger 4 either to the first portion 28 through the first pipe 38, the intersection organ 36 and the second pipe 40, or to the second portion 30 through the first pipe 38, the intersection organ 36 and the third pipe 42.

The first connection device 12 also comprises a fourth pipe 44 extending between the intersection organ 36 and the fluidic interface 24, such that the refrigerant fluid circulating from the fluidic interface 24 to the first heat exchanger 2.

Furthermore, the expansion device 8 of the refrigerant fluid mentioned above is located on the first portion 28 of the first connection device 12. More particularly, the expansion device 8 is located on the second pipe 40 between the intersection organ 36 and the first heat exchanger 2. In this disposition, a pressure of the refrigerant fluid circulating through the second pipe 40 decreases, causing a cooling of the liquid.

The second pipe 40 of the first connection device 12 is fluidly connecting to the first pass of the first heat exchanger 2, the cooling refrigerant fluid circulates through this pass to the second connection device 14.

For its part, the second connection device 14 comprises a first canal 46 extending between the first heat exchanger 2 and the accumulation device 10 and at least a second canal 48 extending between the first canal 46 and the fluidic interface 24. More particularly, the first canal 46 extends between the first pass of the first heat exchanger 2 to the accumulation device 10.

In other words, the second connection device 14 presents a bifurcation 50 between the first canal 46 and the second canal 48.

The third connection device 16 extends between the accumulation device 10 and the internal heat exchanger 4.

The fourth connection device 18 extends between the internal heat exchanger 4 and the compressor device 6.

As shown in figures 1, 2, 3 and 5, the connecting system 20 comprises a fifth connection device 52 fluidly connecting the compressor device 6 at least to the second heat exchanger 22, a sixth connection device 54 fluidly connecting the second heat exchanger 22 to the internal heat exchanger 4.

The fifth connection device 52 comprises a first conduit 56 extending between the compressor device 6 and the second heat exchanger 22 and at least a second conduit 58 extending between the first conduit 56 and the fluidic interface 24. In other words, the fifth connection device 52 presents an intersection point 60 between the first conduit 56 and the second conduit 58, the refrigerant fluid circulating from the compressor device 6 circulates to the intersection point 60, and then, either to the second heat exchanger 22 through the first conduit 56, or to the fluidic interface 24 through the second conduit 58.

The fifth connection device 52 comprises at least a shut-off valve. Advantageously, the fifth connection device 52 comprises a first shut-off valve 62 located on the first conduit 56 between the intersection point 60 and the second heat exchanger 22 and a second shut-off valve 64 located on the second conduit 58.

According to the invention, the connection system comprises at least a conduit longitudinally framed by on the one hand the compressor device 6, and to the other hand to the first heat exchanger 2, the internal heat exchanger 4 and the second heat exchanger 22. As shown in figure 3, the mentioned conduit is the first conduit 56 of the fifth connection device 52.

As shown in figure 5, the refrigerant fluid circulates on the one hand through the high-pressure portion and on the other hand through the low-pressure portion in a closed loop. It is possible to define a main loop and auxiliary loops connecting to the main loop.

More particularly, in the main loop, the refrigerant fluid circulates in the high-pressure portion from the compressor device 6 to the expansion device 8 through the fifth connection device 52, the second heat exchanger 22, the sixth connection device 54, the internal heat exchanger 4 and the first portion 28 of the first connection device 12. For that, the refrigerant fluid circulates through the first conduit 56 of the fifth connection device 52 to the first pass of the second heat exchanger 22. As it circulates through the first pass of the second heat exchanger 22, the refrigerant fluid exchanges calories with the second liquid circulating through the second pass of the second heat exchanger 22, for instance handing over calories to the liquid to heat said liquid.

Then, the refrigerant fluid circulates through the sixth connection device 54 from the first pass of the second heat exchanger 22 to the internal heat exchanger 4. As it circulates through the internal heat exchanger 4, the refrigerant fluid exchanges calories with the refrigerant fluid circulates through the low-pressure portion to heat the refrigerant fluid circulates through the low-pressure portion.

The refrigerant fluid circulates then from the internal heat exchanger 4 to the expansion device 8 through the first portion 28 of the first connection device 12, and more particularly through the first pipe 38, the intersection organ 36 and the second pipe 40.

The refrigerant fluid circulates in the low-pressure portion from the expansion device 8 to the compressor device 6 through the first heat exchanger 2, the accumulation device 10, the internal heat exchanger 4 and the fourth connection device 18. For that, the refrigerant fluid circulates from the expansion device 8 to the first heat exchanger 2 through the second pipe 40, and more particularly to the first pass of the first heat exchanger 2. As it circulates through the first pass of the first heat exchanger 2, the refrigerant fluid exchanges calories with the first liquid circulating through the second pass of the first heat exchanger 2, for instance transfer calories to the first liquid to cool said first liquid.

Then, the refrigerant fluid circulates through the second connection device 14 from the first pass of the first heat exchanger 2 to the accumulation device 10. More particularly, the refrigerant fluid circulates for that through the first canal 46 of the second connection device 14. In the accumulation device 10, a part of the refrigerant fluid may be stored.

The refrigerant fluid circulates from the accumulation device 10 to the internal heat exchanger 4 through the third connection device 16. As it circulates through the internal heat exchanger 4, the refrigerant fluid exchanges calories with the refrigerant fluid circulating in the high-pressure portion to cool the refrigerant fluid circulates through the high-pressure portion.

The refrigerant fluid circulates then from the internal heat exchanger 4 to the compressor device 6 through the fourth connection device 18.

In this embodiment, the refrigerant fluid circulates also through two auxiliary loops.

In a first auxiliary loop, the refrigerant fluid circulates through the second conduit 58 of the fifth connection device 52 from the compressor device 6 to the fluidic interface 24, and then to the fluidic interface 24 to the intersection organ 36 through the fourth pipe 44. More particularly, the fluidic interface 24 is fluidly connecting to a thermal treatment system comprising at least another heat exchanger called inner condenser, constitutive of a heating, ventilation and/or air conditioning system of the vehicle for instance. The refrigerant fluid circulates through this inner condenser to exchange calories with a fluid, for example air or a liquid. The refrigerant fluid circulates then through the fourth pipe 44 to the intersection organ 36, and after to the expansion device 8.

In a second auxiliary loop, the refrigerant fluid circulates through the second portion 30 of the first connection device 12 from the intersection organ 36 to the fluidic interface 24, and then to the fluidic interface 24 to the second connection device 14. More particularly, the refrigerant fluid circulates through the third pipe 42 of the second portion 30 from the intersection organ 36. As mentioned above, the fluidic interface 24 is fluidly connecting to the thermal treatment system comprising at least another heat exchanger, called evaporator, constitutive of the heating, ventilation and/or air conditioning system of the vehicle for instance. Moreover, the thermal treatment system comprises the expansion device 8 through which the refrigerant fluid is expanded. The refrigerant fluid circulates through this evaporator to exchange calories with a fluid, and advantageously to capture calories from the fluid and cool the said fluid. The refrigerant fluid circulates then through the second canal 48 to the bifurcation 50, and after to the accumulation device 10.

The invention shall not, however, be limited to the means and configurations described and illustrated herein, and shall also extend to any equivalent means or configuration described and illustrated herein, and to any technical combination operating such means. In particular, many temperature sensors and/or pressure sensors may be used on the different connection devices, to measure and control the temperature and the pressure of the refrigerant fluid circulating through the heating and/or cooling treatment module 1.

## Claims

1. A heating and/or cooling treatment module (1) for vehicle comprising at least a compressor device (6), a heat exchanger (2) adapted to exchange heat between a refrigerant fluid and a liquid and an accumulation device (10) adapted to store at least partially refrigerant fluid, **characterized in that** the heating and/or cooling treatment module (1) comprises connection devices (12, 14, 16, 18) fluidly connecting the compressor device (6), the heat exchanger (2) and accumulation device (10) to each other, the heat exchanger (2) extending mainly along a longitudinal direction (L1), the compressor device (6) extending mainly along a main direction (Ti) which is perpendicular to the longitudinal direction (L1).

2. The heating and/or cooling treatment module (1) according to the preceding claim, comprising an internal heat exchanger (4) configured to exchange heat between refrigerant fluid at high temperature and refrigerant fluid at low temperature, said internal heat exchanger (4) extending mainly along a longitudinal direction (L2) which is parallel to the longitudinal direction (Li) of said heat exchanger (2).

3. The heating and/or cooling treatment module (1) according to the preceding claim, **characterized in that** said longitudinal direction (Li) of said heat exchanger (2), said longitudinal direction (L2) of said internal heat exchanger (4) and said main direction (Ti) of said compressor device (6) are part of parallel plans.

4. The heating and/or cooling treatment module (1) according to the preceding claim, **characterized in that** the compressor device (6) comprises a rotation shaft which extends mainly along the main direction (Ti) of said compressor device (6).

5. The heating and/or cooling treatment module (1) according to one of the preceding claims, **characterized in that** the compressor device (6) is shifted compared at least to the heat exchanger (2) according to a vertical direction (V), the latest being perpendicular to the longitudinal direction (Li) of said heat exchanger (2) and the main direction (Ti) of said compressor device (6).

6. The heating and/or cooling treatment module (1) according to one of the preceding claims, **characterized in that** the compressor device (6) is shifted compared at least to the heat exchanger (2) according to the longitudinal direction (Li) of said heat exchanger (2).

7. The heating and/or cooling treatment module (1) according to one of the preceding claims, **characterized in that** the heat exchanger (2) adapted to exchange heat between a refrigerant fluid and a liquid is a first heat exchanger (2), the heating and/or cooling treatment module (1) comprising a second heat exchanger (22) adapted to exchange heat between a refrigerant fluid and a liquid.

8. The heating and/or cooling treatment module (1) according to the preceding claim, **characterized in that** the second heat exchanger (22) extends a longitudinal direction (L3) which is parallel to the longitudinal direction (Li) of said first heat exchanger (2).

9. The heating and/or cooling treatment module (1) according to one of the claims 6 or 7, **characterized in that** the first heat exchanger (2), the second heat exchanger (22) and the internal heat exchanger (4) are installed next to each other so as to be parallel to each other, the internal heat exchanger (4) being located between the first heat exchanger (2) and the second heat exchanger (22).

10. The heating and/or cooling treatment module (1) according to one of the preceding claims combined with any one of claim 2 to 4, **characterized in that** the heating and/or cooling treatment module (1) comprises at least a first connection device (12) fluidly connecting the internal heat exchanger (4) at least to the heat exchanger (2), a second connection device (14) fluidly connecting the heat exchanger (2) to the accumulation device (10), a third connection device (16) fluidly connecting the accumulation device (10) to the internal heat exchanger (4), a fourth connection device (18) fluidly connecting the internal heat exchanger (4) to the compressor device (6), each connexion device (12, 14, 16, 18) comprising at least a canal adapted to guide the refrigerant fluid, the heating and/or cooling treatment module (1) comprising a connecting system (20) fluidly connecting at least the compressor device (6) to the internal heat exchanger (4), at least the connection devices (12, 14, 16, 18) being located on a same face of the heating and/or cooling treatment module (1).

11. The heating and/or cooling treatment module (1) according to the preceding claim, comprising a fluidic interface (24) adapted to connect at least the connecting system (20) and/or the connection devices (12, 14, 16, 18) to a heat treatment installation (26) external to the heating and/or cooling treatment module (1).

12. The heating and/or cooling treatment module (1) according to one of claims 10 or 11, **characterized in that** the connecting system (20) comprises at least a conduit (56) longitudinally framed by on the one hand the compressor device (6) and to the other hand the first heat exchanger (2), the internal heat exchanger (4) and the second heat exchanger (22).

13. The heating and/or cooling treatment module (1) according to one of claims 10 to 12, comprising a box housing at least the compressor device (6), the internal heat exchanger (4), the heat exchanger (2), the accumulation device (10) and the connection devices (12, 14, 16, 18), the box comprising a bottom wall and lateral walls extending between the bottom wall to a free end, the free ends of the lateral walls participating to delimit an opening.

14. The heating and/or cooling treatment module (1) according to the preceding claim, **characterized in that** the bottom wall comprises a first portion facing the heat exchangers (2, 4) and a second portion facing the compressor device (6), the second portion participating to delimit a cavity housing at least partially the compressor device (6).

15. The heating and/or cooling treatment module (1) according to one of the claims 13 or 14 in combination with the claim 11, **characterized in that** the fluidic interface (24) is disposed through one of the lateral walls of the box.
